# EUROPÄISCHE PATENTSCHRIFT

(11) **EP 2 178 702 B1**
(45) Veröffentlichungstag und Bekanntmachung des Hinweises auf die Patenterteilung: **25.06.2014**
(21) Anmeldenummer: 08786969.9
(22) Anmeldetag: 06.08.2008
(51) Int. Cl.: B32B 27/36

(54) **FOLIENANORDNUNG**
FILM ARRANGEMENT
ENSEMBLE STRATIFIÉ

(30) Priorität: 14.08.2007 DE 102007038473
(43) Veröffentlichungstag der Anmeldung: 28.04.2010
(73) Patentinhaber: Huhtamaki Films Germany GmbH & Co. KG, 91301 Forchheim (DE)
(72) Erfinder: STARK, Kurt, 91284 Neuhaus / Peg. (DE); MAUSER, Karl, 91359 Leutenbach (DE); KELM, Roland, 91301 Forchheim (DE)
(74) Vertreter: Kutzenberger, Helga
(86) Internationale Anmeldenummer: PCT/EP2008/060364
(87) Internationale Veröffentlichungsnummer: WO 2009/021893

(56) Entgegenhaltungen:
- WO-A-01/98399
- CN-A- 1 821 303
- Mihir Sheth ET AL: "Biodegradable Polymer Blends of Poly (lactic acid) and Poly (ethylene glycol )", Journal of Applied Polymer Science, 21 November 1997 (1997-11-21), pages 1495-1505, XP055064955, Retrieved from the Internet: URL:http://onlinelibrary.wiley.com/store/1 0.1002/(SICI)1097-4628(19971121)66:8<1495: :AID-APP10>3.0.CO;2-3/asset/10_ftp.pdf?v=1 &t=hhhid4am&s=ba0f313ca30340fe6916240aa869 66cf31fbd597 [retrieved on 2013-06-03]
- Hani Younes ET AL: "Phase separation in poly(ethylene glycol)/poly(lactic acid) blends", European Polymer Journal, vol. 24, no. 8, 1 January 1988 (1988-01-01), pages 765-773, XP055065034, ISSN: 0014-3057, DOI: 10.1016/0014-3057(88)90013-4

## Beschreibung

Die Erfindung bezieht sich auf eine insbesondere biologisch abbaubare Folienanordnung mit wenigstens drei Schichten gemäß Anspruch 1.

Aus dem Stand der Technik sind verschiedenste, insbesondere biologisch abbaubare Folienanordnungen bekannt. Unter anderem werden dort PLA-Folien beschrieben, die einen Weichmacher enthalten. Als Weichmacher sind vor allem kurzkettige organische Ester vorgesehen.

Diese vor allem PLA enthaltenden Folienanordnungen weisen jedoch das erhebliche Problem auf, daß diese aufgrund der Steifigkeit des PLAs nur bei einigen wenigen Anwendungen eingesetzt werden können. Bei Hinzufügung von Weichmachern besteht das Problem, daß diese sehr schnell aus dem Kunststoffmaterial herausdiffundieren oder die optischen und mechanischen Eigenschaften der Folie negativ beeinflussen. Der Einsatz im Hygienebereich als Backsheet-Folie ist beispielsweise nicht möglich, da dort nur sehr weiche und anschmiegsame Folien verwendet werden können. Ebenso sind die bekannten Folienanordnungen nicht für den Verpackungsbereich geeignet. Die dort notwendige Flexibilität, Reißfestigkeit, Schlagzähigkeit und Tiefziehfähigkeit kann nicht gewährleistet werden.

Daher liegt der Erfindung die Aufgabe zugrunde, eine Folienanordnung vorzuschlagen, die in den verschiedensten Anwendungsbereichen eingesetzt werden kann und gegenüber bekannten PLA Folien und Folienanordnungen eine große Weichheit aufweist.

Diese Aufgabe wird erfindungsgemäß dadurch gelöst, daß die Folienanordnung mindestens drei Schichten, gemäß Anspruch 1, aufweist.

Hierdurch wird die Steifheit verringert und eine größere Weichheit erzielt.

Dabei hat es sich als sehr vorteilhaft erwiesen, daß als Weichmacher ein Polyglykol entsprechend Anspruch 1, insbesondere ein Polyethylenglykol, ein Polypropylenglykol oder dergleichen vorgesehen ist.

Polyglykole haben sich als ideale Weichmacher für PLA erwiesen. Durch die Auswahl langkettiger Weichmacher, gegenüber denen im Stand der Technik ein Vorurteil besteht, wird die erfindungsgemäße Aufgabe gelöst. Gemäß dem Stand der Technik besteht das Vorurteil, daß langkettige Weichmacher die Stabilität der Kunststoffschicht negativ beeinflussen würden und daß der Kunststoff gelblich und/oder trüb verfärbt werden würde. Dies wurde auch in der Vergangenheit schon bei größeren Anteilen kurzkettiger Weichmacher beobachtet.

Äußerst vorteilhaft ist es gemäß einer weiteren Ausgestaltung der Erfindung auch, wenn als Weichmacher ein modifiziertes Polyglykol, insbesondere ein modifiziertes Polyethylenglykol, ein modifiziertes Polypropylenglykol oder dergleichen vorgesehen ist, wobei der Weichmacher mit einer Carbonsäurefunktion modifiziert ist.

Hierdurch wird die Einbettung des Weichmachers in das PLA verbessert.

Das Molekulargewicht des Weichmachers liegt zwischen 20000 und 4000000.

Sehr vorteilhaft ist es, wenn das Molekulargewicht des Weichmachers zwischen 25000 und 400000 liegt

Bei diesen Werten für das Molekulargewicht des Weichmachers wurden besonders gute Ergebnisse in Bezug auf Weichheit erzielt. Zudem wird ein Herausdiffundieren des Weichmachers aus dem PLA weitgehend unterbunden, so daß lange Haltbarkeitszeiten erreicht werden können.

Gemäß einer weiteren Ausgestaltung der Erfindung ist es äußerst vorteilhaft, wenn das PLA mit 0,01 bis 40 Gewichtsprozent, vorzugsweise mit 5 bis 25, insbesondere mit 10 bis 20 Gewichtsprozent Weichmacher versehen ist.

Der Einsatz derart geringer Beimischungen ist ausreichend um die gewünschte Weichheit zu erzielen, die mit LLDPE, LDPE und ähnlichen Folien vergleichbar ist.

Erfindungsgemäß sind der PLA Schicht weitere Schichten beigeordnet.

Durch weitere Schichten wird der Folienaufbau nochmals universeller einsetzbar.

Dabei hat es sich als äußerst vorteilhaft erwiesen, wenn die Schichten im Coextrusions-Blas- oder Coextrusions-Cast-Verfahren hergestellt sind.

Hierdurch wird die Herstellung entscheidend vereinfacht.

Es hat sich dabei als äußerst vorteilhaft erwiesen, wenn die PLA-Schicht mit wenigstens einer Barriereschicht versehen ist.

Durch die Barriereschicht kann die Folienanordnung auch zum Verpacken von empfindlichen Lebensmitteln oder dergleichen verwendet werden.

Erfindungsgemäß ist es äußerst vorteilhaft, wenn die weiteren Schichten ebenfalls biologisch abbaubar sind.

Damit wird die biologische Abbaubarkeit des Gesamtverbundes nicht verschlechtert.

Die PLA-Schicht ist zwischen wenigstens zwei Außenschichten eingebettet.

Hierdurch wird die PLA Schicht zusätzlich geschützt.

Die Folienanordnung ist als mehrschichtiger Folienaufbau mit wenigstens drei Schichten aufgebaut, wobei die beiden Außenschichten jeweils aus einer PLA-Schicht bestehen.

Hiermit erschließen sich wieder andere Einsatzmöglichkeiten.

Erfindungsgemäß enthalten die aus PLA bestehenden Außenschichten entweder keinen Weichmacheranteil, wohingegen wenigstens eine Innenschicht aus einem PLA mit einem Weichmacher vorgesehen ist, oder die Außenschichten enthalten einen geringen Weichmacheranteil zwischen 0,1 und 10%, insbesondere zwischen 0,1 und 5% und eine Innenschicht aus PLA weist einen höheren Weichmacheranteil auf.

Durch beide Ausgestaltungen wird erreicht, daß die Verblockungsneigung zwischen mehreren Folien vermindert bzw. vermieden wird, die durch weichgemachtes PLA auftritt. Trotzdem werden die Eigenschaften der gesamten Folie durch die innere, weichgemachte PLA-Schicht geprägt, so daß als Resultat eine weiche, aber dennoch eine höchstens geringe Verblockungsneigung aufweisende PLA Folie vorliegt. Die Beiordnung weiterer Schichten, die auch aus PLA gebildet sein können, ist denkbar.

Sehr vorteilhaft ist es erfindungsgemäß auch, wenn die Folienanordnung gereckt ist.

Hierdurch werden nochmals die Eigenschaften der Folie verbessert.

Ebenfalls sehr vorteilhaft ist es, wenn wenigstens eine Außenschicht der Folienanordnung ein Druckbild trägt.

Dadurch kann die Folie direkt als Endverpackung für Waren eingesetzt werden oder aber es können Muster oder dergleichen auf Artikeln im Hygienebereich vorgesehen werden.

Ein Verfahren zur Herstellung einer derartigen Folienanordnung liegt vor, wenn das PLA mit dem Weichmacher im Extruder vermischt und homogenisiert wird.

Dadurch wird eine sehr gleichmässige Verteilung des Weichmachers im PLA sichergestellt.

Erfindungsgemäß wird die PLA Schicht zusammen mit weiteren Schichten coextrudiert.

Damit lässt sich gleich ein Großteil der Folienanordnung oder auch die gesamte Folienanordnung in einem einzigen Arbeitsschritt herstellen.

Dabei ist es sehr vorteilhaft, wenn die Folienanordnung im Cast-Verfahren extrudiert wird.

Ebenfalls sehr vorteilhaft ist es auch, wenn die Folienanordnung im Blasverfahren extrudiert wird.

Bei beiden Extrusionsverfahren lassen sich auf einfache Art und Weise ein- und mehrschichtige Folien herstellen.

Eine erfindungsgemäß sehr vorteilhafte Verwendung einer Folienanordnung liegt dann vor, wenn die Folienanordnung zur Formung von Behältnissen tiefgezogen wird.

Dadurch lassen sich Schalen oder auch Becher für Verpackungszwecke herstellen, die biologisch abbaubar sind.

Ebenfalls sehr vorteilhaft ist es, wenn die Folienanordnung mit weiteren Folien oder Folienanordnungen versiegelt ist.

Dadurch lassen sich Beutel, Schläuche oder auch Einschlagverpackungen bilden.

Eine weitere sehr vorteilhafte Ausgestaltung der Erfindung liegt auch dann vor, wenn die Folienanordnung als Backsheet-Folie eingesetzt wird.

Gerade im Hygienebereich, in dem Backsheet-Folien eingesetzt werden, kommt es auf weiche Folien und deren biologische Abbaubarkeit an.

Es hat sich erfindungsgemäß auch als äußerst vorteilhaft erwiesen, wenn die Folienanordnung als strapazierfähige Deckfolie eingesetzt wird.

Durch einen mehrschichtigen Aufbau kann die Folienanordnung genau auf die Anforderungen einer Deckfolie abgestimmt werden.

Im folgenden wird die Erfindung anhand mehrerer Ausführungsbeispiele veranschaulicht.

Dabei zeigen:
- Fig. 1: einen dreischichtigen Folienaufbau mit einer innenliegenden mit Weichmachern versehenen PLA-Schicht,
- Fig. 2: einen Folienaufbau mit zwei außenliegenden mit Weichmachern versehenen PLA-Schichten, und
- Fig. 3: einen fünfschichtigen Folienaufbau mit mehreren mit Weichmachern versehenen innenliegenden PLA-Schichten.

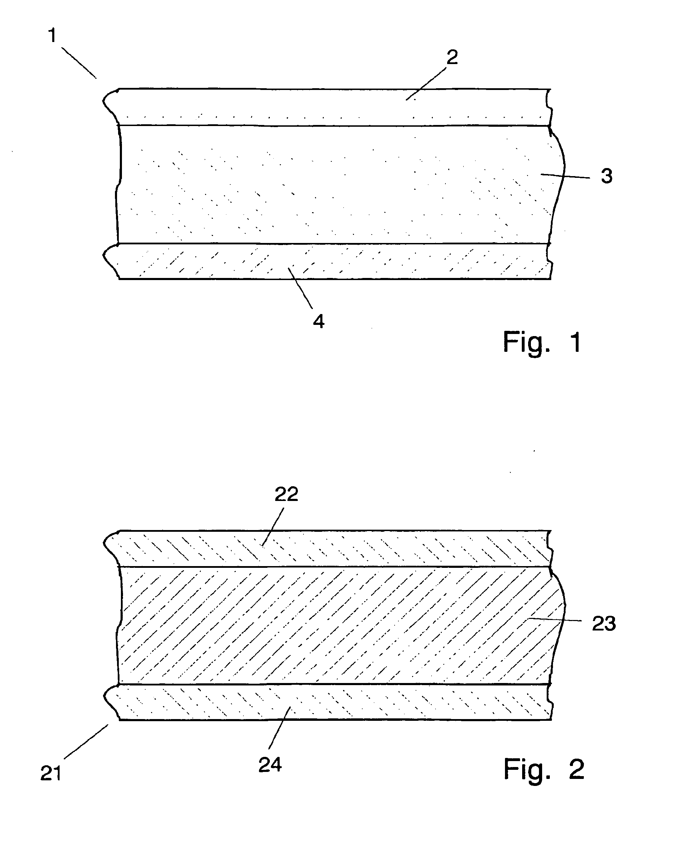

Mit 1 ist in Fig. 1 ein Folienaufbau bezeichnet, der aus zwei äußeren Deckschichten 2 und 4 besteht. Zwischen den Deckschichten 2 und 4 ist eine biologisch abbaubare PLA-Schicht 3 angeordnet.

Diese PLA Schicht 3 ist mit Weichmachern ausgerüstet, die aus Polyglokolen, modifizierten Glykolen oder dergleichen bestehen.

Es werden langkettige Polyglykole, vor allem Polyethylenglykol und Polypropylenglykol mit einer Molekülmasse größer 8000 eingesetzt um ein ungewolltes Herausdiffundieren aus dem PLA zu verhindern. Auf diese Art und Weise wird das PLA für lange Zeit durch die Weichmacher weich gehalten.

Im vorliegenden Beispiel wurden beste Ergebnisse mit einem Polyglykol mit einer Molekülmasse von 35000 und 85 Teilen PLA zu 15 Teilen PEG erzielt. Die Schichtdicke der Innenschicht beträgt 30 µm. Die Glasübergangstemperatur des PLA/PEG-Batches Tg beträgt 36°C.

Die Deckschichten 2 und 4 wurden ebenfalls aus PLA gefertigt. Hier wurden 3% Antiblockmittel hinzugefügt. Die Schichtdicken betragen jeweils 10 µm. Tg beträgt 65°C.

Durch diesen Folienaufbau wird ein Verblocken mehrerer Folienschichten zum Beispiel im aufgerollten Zustand vermieden. Die Eigenschaften der Gesamtfolie werden jedoch trotzdem von der Innenschicht geprägt, so daß sich eine sehr weiche, aber dennoch stabile und auch tiefziehbare Folie ergibt.

Es sei darauf hingewiesen, daß die Innenschicht 3, wenn diese ohne die Deckschichten 2 und 4 aufgewickelt werden würde, bei der Lagerung im aufgerollten Zustand derart verblocken würde, daß ein Abrollen nicht mehr möglich wäre.

Die Ursache hierfür ist die niedrige Glasübergangstemperatur eines mit einem Weichmacher versehenen PLA. Diese niedrige Glasübergangstemperatur wird oftmals schon bei der Lagerung, spätestens aber zur Weiterverarbeitung in Fabrikhallen überschritten, so daß sich die Schichten einer Rolle miteinander regelrecht verbacken.

Der Anteil an Additiven in den Außenschichten 2 und 4 kann zwischen 0 und 15% betragen. Additive aus der Gruppe der Farbstoffe, der optischen Aufheller, der Antiblockmittel, der Antistatika, der Antifogmittel, der Gleitmittel, der UV-Absorber, der Füllstoffe, der Peel- und/oder Siegeladditive, der Antioxidantien und/oder der Prozesshilfsmittel sind denkbar. Es ist dabei auch denkbar, daß derartige Additive in Innenschichten vorgesehen sind.

Weitere Versuche bei einer Molekülmasse 20000, 35000 und 300000 haben ebenfalls sehr weiche, mit LDPE Folien vergleichbare PLA Folien erzeugt, die ihre Weichheit auch bei erhöhten Temperaturen über lange Zeit beibehalten haben. Der Anteil des Polyethylenglykols betrug dabei zwischen 10 und 15%.

Durch das hohe Molekulargewicht ist die Migration des PEGs eingeschränkt, und die Wirkung als Weichmacher im Vergleich zu den niedermolekularen Typen ist deutlich effektiver. Höhermolekulare Polyglykole können aufgrund ihrer hohen Kohäsion sehr gut bei der Extrusion verwendet werden.

Die Transparenz der PLA Folie ist dabei ausgezeichnet und wird durch den Weichmacher nicht beeinträchtigt.

Um dies zu erreichen und damit das im Stand der Technik vorhandene Vorurteil zu widerlegen wurde zunächst ein Batch zwischen PLA und PEG mit einem höheren PEG Anteil hergestellt. Im Extruder wird dann weiteres PLA hinzugefügt, so daß sich das gewünschte Verhältnis zwischen PLA und PEG ergibt. So kann beispielsweise 70% des Batches mit 30% PLA vermischt werden um auf das Verhältnis 85:15 zu kommen.

Damit werden Vorurteile gemäß dem allgemeinen Stand der Technik, die den Einsatz von PLA aufgrund zu großer Diffusion bei kleineren Molekülmassen bzw. optischer Beeinträchtigungen bei größeren Molekülmassen verneinen, überwunden.

Dieses Vorurteil wird dadurch überwunden, daß für eine sehr gleichmäßige und homogene Verteilung des Polyglykols im PLA durch Vermischung im Extruder gesorgt wird. Es ist aber auch denkbar, daß zuerst ein geringerer Anteil des Weichmachers zugesetzt ist und erst kurz vor der Extrusion weiterer Weichmacher hinzugefügt wird um die gewünschte Konzentration zu erreichen.

Die PLA Folie kann alleine extrudiert oder aber zusammen mit weiteren Schichten coextrudiert werden.

Durch die Weichmacher wird die PLA-Schicht 3 andererseits durchlässiger für Wasserdampf und Gase. Daher ist es denkbar, daß wenigstens eine der beiden Deckschichten 2 und 4 als Barriereschicht ausgebildet ist, die diese Wasserdampf- und Gastransmission verhindert. Es ist aber auch denkbar, daß zwischen der PLA-Schicht 3 und den Deckschichten 2 und 4 weitere, auch als Barriereschicht ausgebildete Schichten vorgesehen sind. Barriereschichten gegenüber UV-Strahlung, Wasserdampf und Sauerstoff sind denkbar.

Es ist aber auch denkbar, daß für andere Anwendungen zwei PLA Schichten 22 und 24 als Außenschichten eines Folienaufbaus 21 vorgesehen sind, und daß zwischen den beiden PLA-Schichten 22 und 24 eine weitere Folienschicht 23 angeordnet ist, die als Barriereschicht ausgebildet sein kann. Bei einer derartigen Ausgestaltung ist es aber meistens sinnvoll, vergleichsweise wenig PEG als Weichmacher dem PLA zuzufügen, um die Glasübergangstemperatur hoch zu halten um damit ein Verblocken zu vermeiden. Die Tg von reinem PLA liegt zwischen 60 und 65 °C. Die Tg des weichgemachten PLAs weist bei der gewünschten Weichheit eine Tg kleiner 55°C, insbesondere kleiner 45°C auf.

Weitere Schichten sind denkbar. Die äußeren PLA-Schichten 22 und 24 können auch einen niedrigen Gehalt an Weichmachern von etwa 2-5% aufweisen, wodurch die Verblockungsneigung mit weiteren Folien zum Beispiel beim Aufwickeln oder Stapeln immer noch gering ist. Die Glasübergangstemperatur liegt noch sehr nahe an der von reinem PLA. Durch den Zusatz der vorgenannten Antiblock-Mittel kann die Verblockungsneigung auch hierbei nochmals verringert werden.

Die Schichten 2, 4 und 23 sind vorzugsweise ebenfalls aus biologisch abbaubaren Rohstoffen, insbesondere PLA hergestellt.

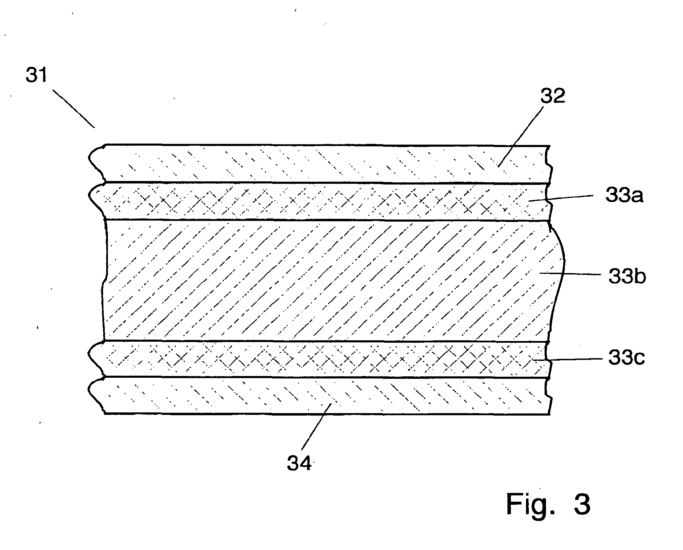

Es ist auch ein fünfschichtiger Aufbau 31 denkbar, wie er in Fig. 3 dargestellt ist. Dort sind zwei Deckschichten 32 und 34 vorgesehen, die jeweils aus PLA mit 3 Prozent Antiblockmittel gefertigt sind und eine Dicke von 12µm aufweisen. Als Innenschichten 33a, 33b und 33c sind drei PLA/PEG Schichten mit einem Verhältnis zwischen PLA und PEG von 85:15 vorgesehen. Die Schichten 33a und 33c weisen eine Dicke von jeweils 14µm auf. Die Schicht 33b weist eine Dicke von 48µm auf.

In der nachfolgenden Tabelle wird diese Folie mit einer ebenfalls fünfschichtigen PLA Folie verglichen, die jedoch in den Schichten 33a, 33b und 33c keinen Weichmacher enthält, ansonsten jedoch gleich aufgebaut ist.

| Test | Folie nach Fig. 3 | Standard PLA Folie |
|---|---|---|
| Schlagzugzähigkeit md/cd | 91 KJ/m²/ 123 KJ/m² | 49 KJ/m²/ 49 KJ/m² |
| Schneidbarkeit | Sehr gut | Schlecht (splittern) |
| E-Modul md/cd | 2002 N/mm²/ 2157 N/mm² | 2857 N/mm²/ 3396 N/mm² |
| Reißfestigkeit | 65.5 N/mm²/ 57,4 N/mm² | 64.5 N/mm²/ 72.95 N/mm² |
| Bruchdehnung | 4.24 % / 5.5 % | 2.49 % / 3,44 % |
| Blocktest | Kein Verblocken | Kein Verblocken |
| Weiterreißfestigkeit md/cd nach Schenkelmethode | 8,6 N / 5,7 N | 3,2 N / 2,6 N |
| Weiterreißfestigkeit md/cd nach Trapezmethode | 44,3 N / 39,3 N | 11,4 N/ 10.6 N |
| Migration | keine | keine |

Bei der erfindungsgemäßen Folie sind die mechanischen Eigenschaften im Vergleich zu einer Standard-PLA-Folie erheblich verbessert, ohne daß irgendwelche Nachteile bei der erfindungsgemäßen Folie sichtbar werden. So wird bei der erfindungsgemäßen biologischabbaubaren Folie die Schlagzugzähigkeit um einen Faktor von 2-3 gegenüber der reinen PLA-Folie verbessert. Ebenso äußert sich die höhere Elastizität der erfindungsgemäßen Folie in einer Zunahme der Bruchdehnung. Die höhere Flexibilität bildet sich in verringerten E-Moduln ab. Hervorzuheben ist eine deutlich bessere Schneidbarkeit der erfindungsgemäßen biologisch abbaubaren Folie, ein Schnitt ist absolut sauber und es tritt kein Absplittern auf. Bei der Weitterreißfestigkeit wird eine erhebliche Verbesserung gegenüber der reinen PLA-Folie festgestellt. So verbessert sich die Weiterreißfestigkeit bei der Trapezmethode um einen Faktor von 4.

Die erfindungsgemäße Folie gemäß Fig 3 zeigt eine ausgesprochen hohe Transparenz. Ebenso findet keine Migration des Weichmachers statt. Eine Verblockung zweier gleicher Folien kann bei keiner der beiden Folien festgestellt werden.

Gerade bei Lebensmittelverpackungen war das Absplittern von Folienmaterial beim Öffnen einer Verpackung bei PLA Folien ein erhebliches Problem, das diesen Einsatz unterbunden hat.

Die Folienanordnung kann noch weitere Schichten enthalten, mit anderen Folien oder Folienaufbauten, Vliesen, Papieren, Metallfolien oder dergleichen zusammenkaschiert werden oder mit sich selbst oder anderen Folien verschweißt oder versiegelt werden.

Durch die hohe Weichheit des PLAs lassen sich die erfindungsgemäßen Folien nicht nur für Verpackungen, insbesondere Lebensmittelverpackungen als tiefgezogene Schalen, Becher, Schlauchbeutel, Deckelfolien usw. einsetzen, sondern auch im Hygienebereich insbesondere als Backsheet-Folien bei Sanitärartikeln wie Damenbinden, Windeln oder dergleichen.

Andere Anwendungen sind denkbar. Beispielsweise lässt sich die erfindungsgemäße Folie besonders gut für Windeln und Beutel einsetzen, die nach Gebrauch entsorgt werden. Im landwirtschaftlichen Bereich kann eine derartige Folie beispielsweise als Mulchfolie eingesetzt werden. Auch der Einsatz als "Wrap Film" oder als Klebebandfolie ist denkbar.

## Patentansprüche

1. Eine Folienanordnung mit einem mehrschichtigen Folienaufbau aus wenigstens drei Schichten, **dadurch gekennzeichnet, dass** die Folienanordnung
mindestens eine Innenschicht aus einem biologisch abbaubaren PLA aufweist und die beiden Außenschichten jeweils aus einer PLA-Schicht bestehen,
wobei
- die Außenschichten keinen Weichmacheranteil enthalten, wohingegen wenigstens eine Innenschicht aus einem PLA mit einem Weichmacher versehen ist,
oder
- die Außenschichten einen geringen Weichmacheranteil zwischen 0,1 und 10%, vorzugsweise zwischen 0,1 und 5%, aufweisen und eine Innenschicht aus PLA einen höheren Weichmacheranteil aufweist,
und wobei als Weichmacher ein langkettiges Polyglykol mit einem Molekulargewicht zwischen 20.000 und 4.000.000 vorliegt.

2. Eine Folienanordnung nach Anspruch 1, **dadurch gekennzeichnet, dass** der Weichmacher ein Molekulargewicht zwischen 25.000 und 400.000 aufweist.

3. Eine Folienanordnung nach einem der vorangehenden Ansprüche, **dadurch gekennzeichnet, dass** der Weichmacher ein Polyethylenglykol, ein Polypropylenglykol, ein modifiziertes Polyglykol, vorzugsweise ein modifiziertes Polyethylenglykol oder ein modifiziertes Polypropylenglykol ist, wobei das Polyglykol mit einer Carbonsäurefunktion modifiziert ist.

4. Eine Folienanordnung nach einem der vorangehenden Ansprüche, **dadurch gekennzeichnet, dass** die Innenschicht mit 0,01 bis 40 Gewichtsprozent, vorzugsweise mit 5 bis 25, insbesondere mit 10 bis 20 Gewichtsprozent Weichmacher versehen ist.

5. Eine Folienanordnung nach einem der vorangehenden Ansprüche, **dadurch gekennzeichnet, dass** sie wenigstens eine Barriereschicht aufweist.

6. Eine Folienanordnung nach einem der vorangehenden Ansprüche, **dadurch gekennzeichnet, dass** wenigstens in einer Außenschicht der Folienanordnung wenigstens ein Additiv aus der Gruppe der Farbstoffe, der optischen Aufheller, der Antiblockmittel, der Antistatika, der Antifogmittel, der Gleitmittel, der UV-Absorber, der Folistoffe, der Peel- und/oder Siegeladditive, der Antioxidantien und/oder der Prozesshilfsmittel vorliegt.

7. Eine Folienanordnung nach einem der vorangehenden Ansprüche, **dadurch gekennzeichnet, dass** die Folienanordnung gereckt ist.

8. Eine Folienanordnung nach einem der vorangehenden Ansprüche, **dadurch gekennzeichnet, dass** wenigstens eine Außenschicht der Folienanordnung ein Druckbild trägt.

9. Ein Verfahren zur Herstellung einer Folienanordnung nach einem der vorangehenden Ansprüche, **dadurch gekennzeichnet, dass** das PLA mit dem Weichmacher im Extruder vermischt und homogenisiert wird und die PLA Schicht zusammen mit weiteren Schichten coextrudiert, vorzugsweise nach dem Cast-Verfahren oder nach dem Blas-Verfahren extrudiert wird.

10. Verwendung einer Folienanordnung gemäß einem der Ansprüche 1 bis 8, zur Formung von Behältnissen durch Tiefziehen oder als strapazierfähige Deckelfolie.

11. Verwendung einer Folienanordnung gemäß einem der Ansprüche 1 bis 8, mit weiteren Folien oder Folienanordnungen versiegelt als Backsheet-Folie, vorzugsweise von Sanitärartikeln.

## Claims

1. A film arrangement having a multilayered film construction formed from at least three layers, **characterized in that** the film arrangement includes
at least one inner layer of a biodegradable PLA and the two outer layers each consist of a PLA layer,
wherein
- the outer layers do not contain any plasticizer, while at least one inner layer of a PLA comprises a plasticizer,
or
- the outer layers have a low plasticizer content between 0.1 and 10%, preferably between 0.1 and 5%, and an inner layer of PLA has a higher plasticizer content,
and wherein a long-chain polyglycol having a molecular weight between 20 000 and 4 000 000 is present as plasticizer.

2. A film arrangement according to Claim 1, **characterized in that** the plasticizer has a molecular weight between 25 000 and 400 000.

3. A film arrangement according to either of the preceding claims, **characterized in that** the plasticizer is a polyethylene glycol, a polypropylene glycol, a modified polyglycol, preferably a modified polyethylene glycol or a modified polypropylene glycol, wherein the polyglycol is modified with a carboxylic acid function.

4. A film arrangement according to any one of the preceding claims, **characterized in that** the inner layer is admixed with 0.01 to 40 weight percent, preferably with 5 to 25, more particularly with 10 to 20 weight percent of plasticizer.

5. A film arrangement according to any one of the preceding claims, **characterized in that** it has at least one barrier layer.

6. A film arrangement according to any one of the preceding claims, **characterized in that** at least one additive from the group consisting of dyes, optical brighteners, antiblocking agents, antistats, antifogging agents, slickers, UV absorbers, fillers, peeling and/or sealing additives, antioxidants and/or processing auxiliaries is present at least in an outer layer of the film arrangement.

7. A film arrangement according to any one of the preceding claims, **characterized in that** the film arrangement is oriented.

8. A film arrangement according to any one of the preceding claims, **characterized in that** at least one outer layer of the film arrangement bears a printed image.

9. A process for producing a film arrangement according to any one of the preceding claims, **characterized in that** the PLA is mixed and homogenized with the plasticizer in the extruder and the PLA layer is coextruded together with further layers, preferably according to the casting process or according to the blowing process.

10. Use of a film arrangement according to any one of claims 1 to 8, for forming containers by thermoforming or as a robust lid film.

11. Use of a film arrangement according to any one of Claims 1 to 8, sealed to further films or film arrangements as backsheet film, preferably of sanitary articles.

## Revendications

1. Agencement de feuille présentant une structure de feuilles multicouche, constituée par au moins trois couches, **caractérisé en ce que** l'agencement de feuille présente au moins une couche interne en un PLA biodégradable et les deux couches externes sont à chaque fois constituées par une couche de PLA
- les couches externes ne contiennent pas de proportion de plastifiant, alors qu'au moins une couche interne en PLA est pourvue d'un plastifiant, ou
- les couches externes présentent une faible proportion de plastifiant entre 0,1 et 10%, de préférence entre 0,1 et 5%, et la couche interne en PLA présente une proportion de plastifiant supérieure,
et le plastifiant étant un polyglycol à longue chaîne présentant un poids moléculaire entre 20 000 et 4 000 000.

2. Agencement de feuille selon la revendication 1, **caractérisé en ce que** le plastifiant présente un poids moléculaire entre 25 000 et 400 000.

3. Agencement de feuille selon l'une quelconque des revendications précédentes, **caractérisé en ce que** le plastifiant est un polyéthylèneglycol, un polypropylèneglycol, un polyglycol modifié, de préférence un polyéthylèneglycol modifié ou un polypropylèneglycol modifié, le polyglycol étant modifié par une fonction acide carboxylique.

4. Agencement de feuille selon l'une quelconque des revendications précédentes, **caractérisé en ce que** la couche interne est pourvue de 0,01 à 40% en poids, de préférence de 5 à 25% en poids, en particulier de 10 à 20% en poids de plastifiant.

5. Agencement de feuille selon l'une quelconque des revendications précédentes, **caractérisé en ce qu'**il présente au moins une couche formant une barrière.

6. Agencement de feuille selon l'une quelconque des revendications précédentes, **caractérisé en ce qu'**au moins un additif du groupe des colorants, des azurants optiques, de antiadhésifs, des antistatiques, des agents antibuée, des lubrifiants, des absorbants des UV, des charges, des additifs de pelage et/ou de scellement, des antioxydants et/ou des adjuvants de transformation se trouve dans une couche externe de l'agencement de feuille.

7. Agencement de feuille selon l'une quelconque des revendications précédentes, **caractérisé en ce que** l'agencement de feuille est étiré.

8. Agencement de feuille selon l'une quelconque des revendications précédentes, **caractérisé en ce qu'**au moins une couche externe de l'agencement de feuille porte une image imprimée.

9. Procédé pour la fabrication d'un agencement de feuille selon l'une quelconque des revendications précédentes, **caractérisé en ce que** le PLA est mélangé et homogénéisé avec le plastifiant dans une extrudeuse et la couche de PLA est coextrudée, ensemble avec d'autres couches, de préférence selon le procédé de moulage ou selon le procédé de soufflage.

10. Utilisation d'un agencement de feuille selon l'une quelconque des revendications 1 à 8 pour le façonnage de récipients par emboutissage profond ou sous forme de feuille formant un couvercle résistant à l'usure.

11. Utilisation d'un agencement de feuille selon l'une quelconque des revendications 1 à 8 scellé avec d'autres feuilles ou agencements de feuilles comme feuille arrière, de préférence d'articles sanitaires.
